# EUROPEAN PATENT APPLICATION

(11) **EP 4 257 522 A1**
(43) Date of publication of application: **11.10.2023**
(21) Application number: 23166488.9
(22) Date of filing: 04.04.2023
(51) Int. Cl.: B65G 47/68

(54) **PRODUCTION LINE WITH A MULTI-LANE CONTAINER TREATMENT MODULE AND METHOD FOR TREATMENTS OF CONTAINERS**

(30) Priority: 05.04.2022 EP 22166779
(71) Applicant: Sidel Participations, 76930 Octeville-sur-Mer (FR)
(72) Inventor: HUME, Stan, 45010 Zapopan (MX)
(74) Representative: Sidel Group

(57) **Abstract**

The invention relates to a production line (1) for treatments of container products (2), comprising an upstream conveyor (3) loaded with products (2) into a multi-lane flow, moving the products (2) along a stream direction through successive treatment workstations (10) with one comprising a multi-lane treatment module along the upstream conveyor (3), a distribution surface (5) located at an end of the upstream conveyor (3)feeding with a multi-lane flow of products (2) the distribution surface (5), at least one downstream conveyor (6) located at an output of the distribution surface (5), transversally moving the products (2) along a single-lane flow, a transfer means (7) longitudinally transferring relative at least a row of the products (2) from the distribution surface (5) to the transversal downstream conveyor (6), **characterized in that** the distribution surface (5) is orientated longitudinally along the stream direction and is aligned with the upstream conveyor (3).

The invention also relates to a conveying device and a production method, and also to a use distribution surface (5) for converting a multi-lane flow of products (2) into at least a single-lane flow of the products, (2).

## Description

### Technical Field

The invention relates to the domain of industrial machines for treatment of products, especially to the industrial handling of products along a production line.

The term "product" includes an individual object. The product is a container, such as a bottle, made of any type of material, in particular made of glass, metal or even plastic, such as PET for "PolyEthylene Terephthalate". Such a container is intended to contain, in a non-exhaustive manner, a fluid or a liquid, in particular of the agrifood type, such as a beverage (i.e. water, juice, soft drink, beer, wine, etc.).

The products are obtained along a production line, comprising successive steps through dedicated workstations, especially a washing operation of the containers or bottles, and then a filling operation, including filling and closing, and also labelling of the outer of the container before or after filling, and eventually pasteurizing or sterilizing.

In particular, such a production line can also be dedicated to the recycling of containers, especially glass and returnable PET bottle recycling.

### Background Art

As well known, a production line can be fed with pallets of stacked levels of empty bottles, separated by layers, such as a tray or a cardboard. Each level is made of a matrix configuration, along rows and columns of empty bottles. Such configuration can be straight or so-called « unnested », the bottles being arranged into a square or rectangular configuration wherein each of the bottles belongs to a row and to a column. Another matrix configuration can be « nested », wherein bottles of a row (or a column) are shifted relative to the bottles of a contiguous row (or column), in such a transversal inclined alignment along an angle of 30° or 60°. Such nested configuration confers a better compact packing of the bottles against each other.

Thenceforth each stacked level of empty bottles is unloaded, from top to bottom of the pallet, through a depalletizing process, wherein several rows (or columns), even all the rows (or columns) of a level, are transferred from the pallet to be deposited on an upstream conveyor.

Then the bottles are conveyed along a stream direction, through the successive workstations dedicated for the treatments, for example to a washing tunnel, wherein the bottles are cleaned and then, eventually inspected through an empty bottle inspection module, before being sent to a downstream flow, in order to fill such newly cleaned bottles. According to an embodiment, the production line can include a sorting module downstream the empty bottle inspection module in order to sort the bottles that could not be filled.

Moreover, the filling operation is usually operated by a filling machine (e.g. rotary), fed by a single flow of bottles. Therefore, for example through a depalletizing operation, products are simultaneously deposited in several rows (or columns) on the upstream conveyor, creating a multi-lane flow. Such multi-lane flow comprises at least two lanes of products which are parallel, each lane extending longitudinally. Usually, a multi-lane flow comprises at least five lanes of products which are parallel. Eventually the multi-lane flow can have a bulk configuration of products. Then the products are then treated in a single-lane flow, for example by a filling machine. In the context of glass bottles or refillable PET bottles, the products need to be washed before being filled again. Also, the washing can be operated through a rotative washing machine or the washing tunnel: the rotative machine working with a single lane flow as input, whereas the washing tunnel is working with a multi-lane flow as input. Especially the washing tunnel can operate on a nested configuration of the flow.

So between each single-lane flow and multi-lane flow, it is necessary to regroup from the product multi-lane flow into the single lane flow (or reversely to ungroup them from the single-lane flow into the multi-lane flow). Such regrouping (or ungrouping) operation is generally obtained with a dedicated conveyor, along considerable length compared to the production line. The dedicated conveyor is relatively more expensive and occupies a large surface of the facility. Indeed, the speed of this dedicated conveyor needs to be adapted to the products, which are unstable resting with their base on the surface of the conveyor. So, the conversion of a multi-lane flow to a single-lane flow cannot be performed along a short length conveyor.

Usually in a production line, there are also some buffer areas. These buffers can be additional conveying meters, or they can be realized as an "accumulation surface", or as an "accumulation table" between two workstations. Therefore, there is a need for a production line to reduce the footprint of the whole installation.

### Summary of Invention

An object of the present invention is to improve a production line for treatments of products, fed from a pallet of stacked products, in order to deliver at least one single-lane flow of products to at least one downstream conveyor.

Moreover, the invention is dedicated to a nested or an unnested configuration of the products, preferably a nested configuration of products.

Therefore, the production line comprises an upstream conveyor, whereon the products are configured into a multi-lane flow (nested or unnested), for example directly deposited during a depalletizing or decrating process. The multi-lane flow comprises at least two lanes, preferably at least five lanes and more preferably at least eight lanes products which are parallel, each lane extending longitudinally. Such upstream conveyor moves the multi-lane flow along the production line through the different dedicated workstations, especially a washing tunnel allowing to clean such a multi-lane flow of several rows of products (and/or eventually a pasteurizing or sterilizing tunnel). Moreover the production line comprises a longitudinal feeding of a distribution surface, located downstream relative to a multi-lane flow workstation, for example a washing tunnel. Such longitudinal feeding allows to keep the multi-lane flow from the upstream conveyor till the output of the distribution surface, without any transversal input transfer at the input of the distribution surface. In other words, the feeding of the distribution surface is continuously realized from the upstream conveyor, due to the alignment of said upstream conveyor and the distribution surface along the stream direction.

At the output of the distribution surface, at least one row of the multi-lane flow is longitudinally transferred to at least one respective single-lane transversal downstream conveyor.

According to an embodiment, at the output of the distribution surface, one (or two) row(s) of the multi-lane flow is (are) longitudinally transferred to respectively one or two single-lane transversal downstream conveyor(s), thanks to a dedicated output transfer means.

According to an embodiment, the downstream transversal conveyors are positioned at different positions of the distribution surface. Two downstream transversal conveyors can be adjacent or separated for example by a dead plate.

Regarding a possible nested configuration of the products, the production line can especially comprise an alignment module, in order to change the nested configuration of the multi-lane flow into an unnested configuration, such alignment module being located along the upstream conveyor or along the distribution surface.

According to an embodiment, the production line further comprises a spacing device in order to create some space between the rows before their output.

Thenceforth the production line according to the invention is dedicated to products which each is a container and comprises- at least an upstream conveyor, loaded with products into a multi-lane flow,
the upstream conveyor moving the products along a stream direction,
- successive workstations along the production line, the workstations being dedicated to the treatments of the products, at least one specific workstation of the workstations comprising a multi-lane treatment module along the upstream conveyor,
- a distribution surface located at an end of the upstream conveyor, the upstream conveyor feeding with a multi-lane flow of products an input of the distribution surface,
- at least one downstream conveyor located at an output of the distribution surface, transversally moving the products along at least a single-lane flow,
- at least a transfer means longitudinally transferring relative to the stream direction at least a row of the products from the distribution surface to the at least one transversal downstream conveyor,

The production line is characterized in that
- the distribution surface is orientated longitudinally along the stream direction and is aligned with the upstream conveyor.

According to an embodiment, the multi-lane flow comprises a nested configuration of the products with several switched rows, one of the workstations comprising an alignment module of the rows.

According to an embodiment, the production line can comprise the alignment module is located along the upstream conveyor or along the distribution surface.

According to an embodiment, the production line can comprise a depalletizing device loading the upstream conveyor, the depalletizing device comprising a handling head of the products integrating the alignment module of the switched rows of the products.

According to an alternative embodiment, the production line can comprise a decrating device loading the upstream conveyor, the decrating device comprising a handling head of the products integrating the alignment module of the switched rows of the products.

According to an embodiment, the production line can comprise
- two downstream conveyors located adjacent each other,
- the transfer means transferring simultaneously two rows of products from the distribution surface to each of the two downstream conveyors.

According to an embodiment, the production line can comprise the two downstream conveyors are moving the single-lane of products in the same direction.

According to an embodiment, the production line can comprise the two downstream conveyors are moving the single-lane of products in opposite directions.

According to an embodiment, the production line can comprise at least one downstream conveyor dimensioned to transport a multi-lane flow, so two or more single-lane flows.

According to an embodiment, the production line can comprise at least two downstream conveyors, the at least two downstream conveyors being separated by a dead plate.

According to an embodiment, the production line can be a recycling line, the multi-lane treatment module of the at least one workstation being a washing tunnel.

The invention also relates to a conveying device for conveying products along a production line, each of the products being a container, comprising
- at least an upstream conveyor moving along a stream direction,
- at least one downstream conveyor with an entry orientated transversally relative to the stream direction,
characterized in that the conveying device further comprises
- a distribution surface with an input located at an end of the upstream conveyor and being orientated longitudinally along the stream direction and being aligned with the upstream conveyor,
- the entry of the at least one downstream conveyor is adjacent to an output of the distribution surface.

According to an embodiment, such conveying device can be integrated into the production line according to the invention.

The invention also relates to a production method for treatments of products, each of the products being a container, wherein
- an upstream conveyor is loaded into a multi-lane flow with the products,
- the upstream conveyor moves the multi-lane flow of the products along a stream direction, through successive workstations dedicated to the treatments of the products, the workstations being located along the production line,
- at the end of the upstream conveyor, feeding with products an input of a distribution surface,
- transferring the products from an output of the distribution surface longitudinally to at least one transversal downstream conveyor,
- moving the single-lane flow of products along the at least one downstream conveyor to a downstream single lane workstation.

The production method is characterized in that
- the feeding of the products from the upstream conveyor to the distribution surface is continuously realized longitudinally along the stream direction in alignment of the upstream conveyor and the distribution surface.

According to an embodiment, the multi-lane flow of the products has a nested configuration with switched rows, the method further comprising the step of aligning the switched rows of the nested multi-lane flow into an unnested multi-lane flow.

The invention also relates to a use of a distribution surface for converting a multi-lane flow of products into at least a single-lane flow of the products, with an output longitudinally transferring from the multi-lane flow to the at least single-lane flow on at least one transversal downstream conveyor, wherein the distribution surface is longitudinally fed with the multi-lane flow along the stream direction and has an input aligned at the end of an upstream conveyor moving the multi-lane flow.

Such the invention allows for example to directly depalletize the stacked level of products from a pallet to deposit them on the upstream conveyor, then move them through the dedicated workstations, into a multi-lane flow along the stream direction, till reaching the output of the distribution surface, where at least one row of products is longitudinally transferred to at least one transversal downstream conveyor, into a single-lane flow. In other words, the invention does not require long grouping (or ungrouping) conveyors, thanks to maintain the multi-lane flow from the depalletizing, till a longitudinal feeding at the input of the distribution surface.

### Brief description of the Drawings

The invention can be better understood on reading the following description given merely by way of example and with reference to the accompanying drawings, in which:
Figure 1 is a schematic view of an example of an architecture of the production line according to the invention, especially showing the different steps from depalletizing to filling;
Figure 2 is a schematic top view of a part of the production line according to a first embodiment, especially showing a single-lane downstream conveyor at an output of the distribution surface;
Figure 3 is a schematic view similar to figure 2 according to a second embodiment, especially showing two single-lane downstream conveyors at the output of the distribution surface;
Figure 4 is a schematic view similar to figure 3 according to a third embodiment, especially showing four output conveyors conveying products along two opposite directions;
Figure 5 is a schematic top part view of figure 2, especially showing the transferring of a row of products from the distribution surface to one downstream conveyor;
Figure 6 is a schematic vertical cross view of figure 5, especially showing a first step when transferring the row with a transfer means comprising a pusher;
Figure 7 is a schematic vertical cross view of figure 5, especially showing a second step after transferring, wherein the pusher is raised up to come back to the distribution surface;
Figure 8 is a schematic vertical cross view of figure 6, especially showing a third step before raising down the pusher in order to repeat the first step;
Figure 9 is a schematic top part view of figure 3, especially showing the transferring of two rows of products to two downstream conveyors;
Figure 10 is a schematic vertical cross view of figure 9, especially showing a first step when transferring the two rows of products, with the transfer means comprising a a dedicated double pusher;
Figure 11 is a schematic perspective view of a part of the production line, especially showing a distribution surface with a double-row output transfer to a single-lane downstream conveyor;
Figure 12 is a schematic top part view of an embodiment of the output transfer, especially showing a double-row output area, with a first upload zone and a second upload zone separated by a buffer area between each of the two first and second upload zone, converging to a single-lane downstream conveyor;
Figure 13 is a schematic vertical section view of figure 12, especially showing a first step when transferring the two rows of products from the distribution surface to the output area; and
Figure 14 is a schematic vertical section view of figure 12, especially showing a second step after transferring one of the two rows on the first upload zone and delivering the downstream conveyor, before transferring the second of the two rows from the buffer area to the second upload zone.

### Description of Embodiments

The invention relates to a production line 1 for treatments of products 2.

As aforementioned, each of the products 2 are containers, preferably a bottle, made of any type of material, in particular made of glass, metal or even plastic, such as PET for "PolyEthylene Terephthalate", also so-called "refillable-PET" or "returnable-PET".
Such a container is intended to contain, in a non-exhaustive manner, a fluid or a liquid, in particular of the agrifood type, such as a beverage (i.e. water, soft, beer, wine, etc.).

The products 2 are transported along the production line 1 along a stream direction, from upstream to downstream. Such stream direction is considered extending longitudinally. So, the products follow the stream direction to be treated through successive steps operated with dedicated workstations. In a non-limitative manner, the workstations can comprise a depalletizing or a decrating device, an empty bottle inspection module, a sorting module, a washing tunnel, a pasteurizer/sterilizer tunnel, a cooling or a heating treatment module, a filler with closing and labelling machines.

According to the invention, the production line 1 comprises at least an upstream conveyor 3. Such upstream conveyor 3 can be made of one or several conveyors, aligned one after each other and/or adjacent to each other. A conveyor is preferably of an end-belt type.

So, the upstream conveyor 3 is moving the products 2 along the stream direction. Especially the products 2 rest on their base on the top surface of the upstream conveyor 3.

It is to be noticed that the expression "lane" is dedicated to the alignment of products 2 along the movement direction of the conveyor, when the products 2 are moved on the top surface of the corresponding conveyor.

Moreover, a single-lane flow corresponds to a unique line of aligned products 2, while a multi-lane flow corresponds to several parallel lanes of aligned products 2. Usually, a multi-lane flow comprises at least two lanes of products, preferably at least five lanes of products, and more preferably at least eight lanes of products which are parallel, each lane extending longitudinally.

First, the upstream conveyor 4 is loaded with the products for example from at least a pallet 4 or from at least a crate.

As aforementioned, the pallet 4 comprises stacked levels of products 4, especially of empty bottles. Each level or stage is separated by a layer, such as a tray or a cardboard. Each level is made of a matrix configuration of products 2 grouped together. Such matrix configuration comprising rows and columns of products 2.

The matrix configuration can be straight or so-called « unnested », the products 2 being arranged into a square configuration, wherein each of the products 2 belongs to a row and to a column.

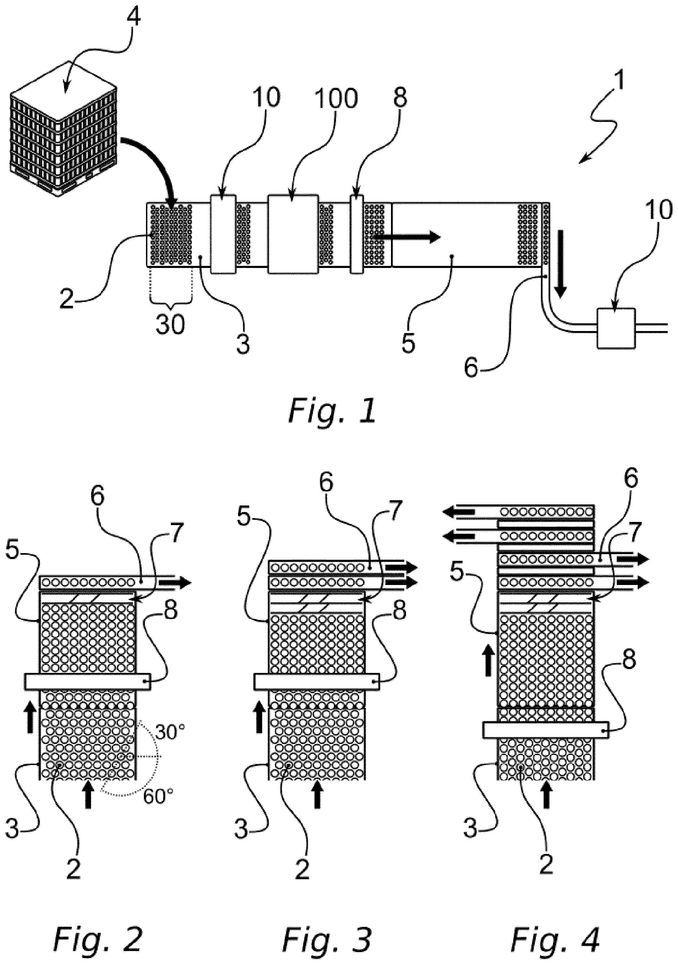

Preferably another matrix configuration can be « nested », wherein products 2 of a row (or a column) are shifted relative to the products 2 of a contiguous row (or column). Also, a first row of products 2 comprises one more product 2 than the contiguous switched row. The nested configuration confers a transversal inclined alignment along an angle of 30° or 60°. Such nested configuration confers a better compact packing of the products 2 against each other, without voids between the products 2. Such nested configuration is especially shown in figure 2.

According to an embodiment, when loading the upstream conveyor 3, each stacked level of products 2 is unloaded, from top to bottom of the pallet 4, through a depalletizing or a decrating process, thanks to a depalletizing workstation comprising at least a depalletizing or a decrating device.

Moreover, the depalletizing or the decrating device can comprise a handling head, configured to grab on or preferably several rows (or columns), even all the rows (or columns) of products 2. The handling head comprises adapted means to secure and maintain the products 2, such as clamping tools to lock the neck of bottles, or even vacuum tools for cans.

Then the depalletizing or the decrating device raised up the grabbed products 2 from the corresponding pallet level and move them over upstream conveyor 3, to finally deposit them on its top surface. Therefore, the handling head is mobile, for example at a distal end of a tridimensionnal robotic arm or a bidimensional frame.

Due to the depalletizing or the decrating process, the upstream conveyor 3 is loaded into a multi-lane flow with the products 2.

According to an embodiment, the upstream conveyor 3 is dimensioned to receive an entire level of a pallet 4. In other words, the upstream conveyor 3 is large enough to be loaded with an entire row (or an entire column) of the products 3. Figure 1 shows a drop area 30 on the entry of the upstream conveyor 3, whereon an entire level of products 2 can be discharged.

Moreover, such as shown in figure 2 and figure 3, the rows extend transversally relative to the stream direction, especially perpendicularly. Such as shown in figure 4, the switched rows extend longitudinally, parallel to the stream direction: nevertheless, it is considered hereinafter that the rows extend transversally.

This being, the upstream conveyor 3 is moving the products 2 along the stream direction, in order to receive their treatments through successive dedicated workstations. Therefore, the production line 1 comprises successive workstations of different types.

According to the invention, at least one of the workstations, so-called "specific workstation 100'", comprising a multi-lane treatment module along the upstream conveyor 3. According to an embodiment, the last of the workstations 10 relative to the stream direction is the specific workstation 100 (i.e. located at the end of the upstream conveyor 3).
According to a preferential embodiment, all of the workstations 10 located along the upstream conveyor 3 are configured to receive and treat a multi-lane flow of products 2.
The specific workstation 100 can be of any type, for example a sorting module to verify the integrity of the products 2, a washing tunnel, or even a pasteurizing/sterilizing tunnel. It could also be a cooling or a heating treatment module. So, the specific workstation 100 is configured to receive and treat a multi-lane flow of products 2.

Then the production line 1 comprises a distribution surface 5. The distribution surface 5 is located at an end of the upstream conveyor 3, so downstream, after the upstream conveyor 3. So, when the products 2 transported on and along the upstream conveyor 3 till reaching its end, the upstream conveyor 3 feeds with the multi-lane flow of products 2 an input of the distribution surface 5.

According to the invention, the distribution surface 5 is orientated longitudinally along the stream direction. In other words, the distribution surface 5 is extending longitudinally along the stream direction. Moreover, the distribution surface 5 is aligned with the upstream conveyor 3. In other words, the input of the distribution surface 5 contiguous or butted to the end of the upstream conveyor 3, both of them extending longitudinally one after each other.

Especially the distribution surface 5 has the same width than the upstream conveyor 3.

It is to be noticed that according to an embodiment, the distribution surface 5 and the upstream conveyor 3 must be large enough to be able to store a large quantity of products 2, in particular being dimensioned to receive at least the number of products 1 stored for example in a level of the pallet 4, for example at least 10 products, preferably at least 20 products of a row (or of a column). In other words, in some embodiments, the multi-lane flow comprises at least ten lanes of products which are parallel, each lane extending longitudinally.

So, the feeding of the input of the distribution surface 5 is managed in a continuous way, following the longitudinal stream direction. In other words, the products 2 are moved directly from the upstream conveyor 3 to the distribution surface 5. So, such feeding does not require any means or tool to manage the passage from the upstream conveyor 3 to the distribution surface 5.

So, the multi-lane flow of products 2 is moved on the upstream conveyor 3 through the specific workstation 100 till directly feeding the distribution surface 5.

When products 2 resting on the distribution surface 5, they can be moved along through dedicated means.

According to an embodiment, the distribution surface 5 comprises at least one conveyor, especially of an end-less type.

According to another embodiment, the distribution surface 5 is a stationary plate, not mobile, and the production line 1 is equipped with upper moving means, such as at least one pusher longitudinally mobile along the stream direction. The pusher can be of any type, especially comprising a vertical plate orientated transversally, especially orthogonally relative to the stream direction.

According to another embodiment, the distribution surface 5 is a combination of at least one conveyor and one stationary plate, located adjacent each other along the stream direction. For example, the distribution surface 5 can comprise one conveyor directly fed by the upstream conveyor 3, the one conveyor moving the products 2 to an adjacent stationary plate.

This being, the production line 1 comprises at least one downstream conveyor 6. The at least one downstream conveyor 6 is located at an output of the distribution surface 5. Such downstream conveyor 6 is moving the products 2 along at least a single-lane flow.

Particularly, the single-lane flow moved by the at least one downstream conveyor 6 extends transversally relative to the longitudinal stream direction of the multi-lane flow moved along the upstream conveyor 3 and the distribution surface 5. Such transversal single-lane flow can extend only along a first section of the downstream conveyor 6, such as shown in figure 1.

According to the invention, the at least one downstream conveyor 6 is orientated transversally relative to the stream direction, preferably perpendicularly to the longitudinal stream direction.

Moreover the at least one downstream conveyor 6 comprises a side which is adjacent or contiguous to the output of the distribution surface 5, preferably along the entire width of the distribution surface 5.

So when the upstream conveyor 3 feeds the distribution surface 5 with transversal rows with a number of products 2 extending along their width, then each of the entire rows are transferred to the at least one downstream conveyor 6.

According to an embodiment, such as shown in figure 2, the production line 1 comprises one downstream conveyor 6, dimensioned to transport only a single-lane flow of products 2.

According to another embodiment, not shown, the production line 1 comprises at least one downstream conveyor 6, dimensioned to transport a multi-lane flow, so two or more single-lane flows.

According to an embodiment, such as shown in figure 3, the production line 1 comprises more than two downstream conveyors 6, each being dimensioned to transport only a single-lane flow of products 2. Moreover, the downstream conveyors 6 are moving the products 2 along the same direction.

The downstream conveyors 6 can be contiguous or separated by a dead plate.

According to an embodiment, such as shown in figure 4, the production line 1 comprises more than two contiguous downstream conveyors 6. Two adjacent conveyors can be brought together, side by side or separated by a stationary plate. Each of the at least two conveyors are dimensioned to transport at least a single-lane flow of products 2. Moreover, the downstream conveyors 6 are moving the products 2 along the two opposite directions. So, each of the downstream conveyors 6 transport products 2 along separated downstream parts of the production line 1.

The example in figure 4 shows four downstream conveyors 6, located adjacent to each other and separated by a stationary plate or so-called "dead plate", wherein a pair of the four downstream conveyors 6 is orientated to the right, while the other pair is orientated to the left.

As aforementioned, the production line 1 comprises several workstations 10 and at least one of the workstations 10 is located along the downstream conveyor 6. Such at least one of the workstations 10 comprising a single-lane treatment module along the at downstream conveyor 6.

According to an embodiment, the first of the workstations 10 along the at least one downstream conveyor 6 comprises the single-lane treatment module (i.e. the first located after the distribution surface 5).

Especially, such a first downstream workstation 10 can be dedicated a filling process of the products 2, comprising a filling machine type or filler 101. Such filler 101 is working with a single-lane flow, for example being of a rotary type.

Also, the downstream parts can be dedicated to a filling process of the products 2, and therefore each of the downstream part comprises at least one workstation 10 of a filling machine type or filler 101. Such filler 101 is working with a single-lane flow, for example being of a rotary type.

Regarding the two downstream parts of the production line 1, each of the two parts comprises such single-lane workstation 10, preferably first located.

Further, the production line1 comprises at least a transfer means 7 longitudinally transferring relative to the stream direction at least a row of the products 2 from the distribution surface 5 to the transversal downstream conveyor 6. So, the transfer means 7 moves rows of products 2 from the distribution surface 5 to place them on the downstream conveyor 6.

The transfer means 7 can be of any type, handling, grabbing, clamps or pushing the row of products 3 out of the distribution surface 5, crossing its output edge to be placed on the top surface of the downstream conveyor 6.

According to an embodiment, the transfer means 7 comprises several mobile pushers, jointly or independently motorized, along the stream direction. Each of the independent pushers sweeps one product row longitudinally along the distribution surface 5, eventually extending from the end of the upstream conveyor 3 and/or to the at least one downstream conveyor 6.

Such of the pushers can be of any type, made of a plate and/or an organ comprising slots wherein products fit in, to secure them during sweeping movement.

According to a preferred embodiment, the transfer means 7 is of a pusher type, sweeping the products 2 from the distribution surface 5 to the downstream conveyor 6.

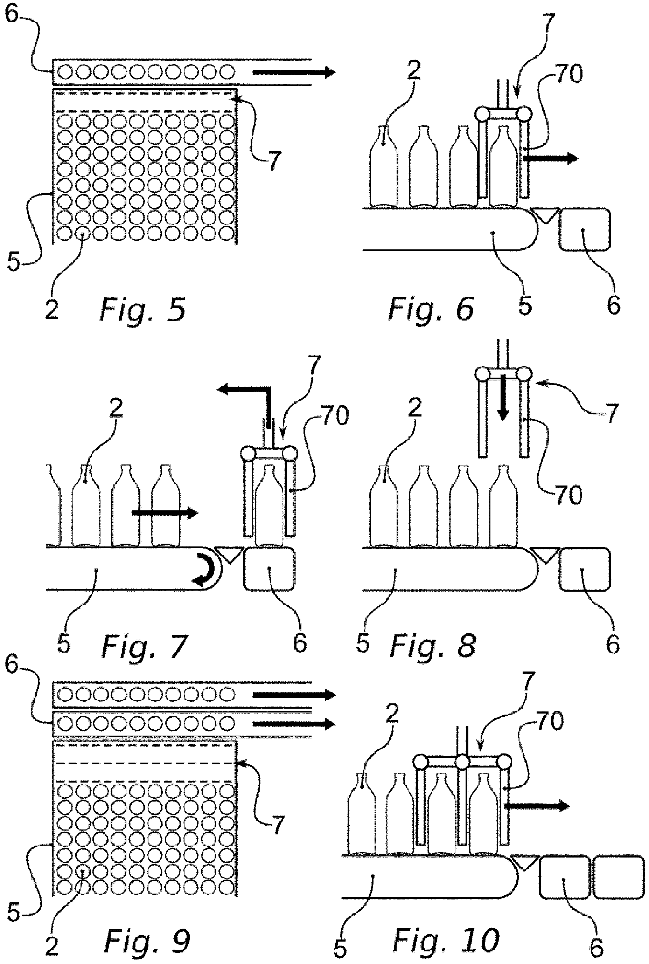

Therefore the pusher is mobile horizontally and longitudinally to push the products 2 from the distribution surface 5 to the downstream conveyor 6, but also vertically to be raised up after pushing the products 2 (and then come back to be raised down over the next row of products 2 to be transferred). The figures 6 to 8 shows examples of the successive steps of the movements of the pusher when transferring.
To allow the mobility of the pusher, the transfer means 7 comprises a bidimensional frame (or eventually tridimensionnal robotic arm), the pusher being mounted motorized on the frame (or at the distal end of the robotic arm) along two or three liberty degrees of movements.

Such pusher comprises at least one plate 70, orientated vertically and transversally relative to the stream direction. Preferably the pusher comprises at least two parallel plates 70, spaced apart according to the dimension of the products 2 to be pushed (i.e. width, length or diameter).

According to an embodiment, such as shown in figures 6 to 8, the pusher comprises two parallel plates 70, in order to transfer one row of products 2.

According to an embodiment, such as shown in figure 10,13,14, the pusher comprises three parallel plates 70, in order to simultaneously transfer at least two rows of products 2.

According to an embodiment, when the pusher comprises several plates 70, some of the plates 70 can be mobile relative to each other's, to get closer and spread apart, in order to adapt the pusher depending on the dimensions of the products 2, eventually to enclose them when pushing and sweeping.

Further, according to an embodiment, when the production line 1 comprises two contiguous downstream conveyors 6, the transfer means 7 are configured to simultaneously transfer two rows of products 2, one of the two rows on each of the two downstream conveyors 6. So, the two downstream conveyors 6 are located adjacent to each other, side by side, in order to allow a direct transfer of the two rows in a same movement. According to an embodiment, two downstream conveyors are separated by a dead plate.

Such as shown in the corresponding embodiment in figure 10, the transfer means 7 comprises a pusher with three plates 70.

It is to be noticed that such transferring is operated discontinuously, pushing rows to the downstream conveyor 6 with a lapse of time between each of the rows, due to the back movement of the pusher.

According to another embodiment, not shown, the downstream conveyor 6 can be divided into two adjacent sub-conveyors. When transferring, a first row is pushed along an inclined direction on the farthest sub-conveyor through the closest sub-conveyor, so that the products 2 of the first row are already moving along the transversal single-flow direction. The relative speeds of the two sub-conveyors are managed to allow the way back of the pusher to push a second row and transfer it in the same way, following the first row.

So this discontinuous transfer allow to continuously supply the at least one downstream conveyor 6.

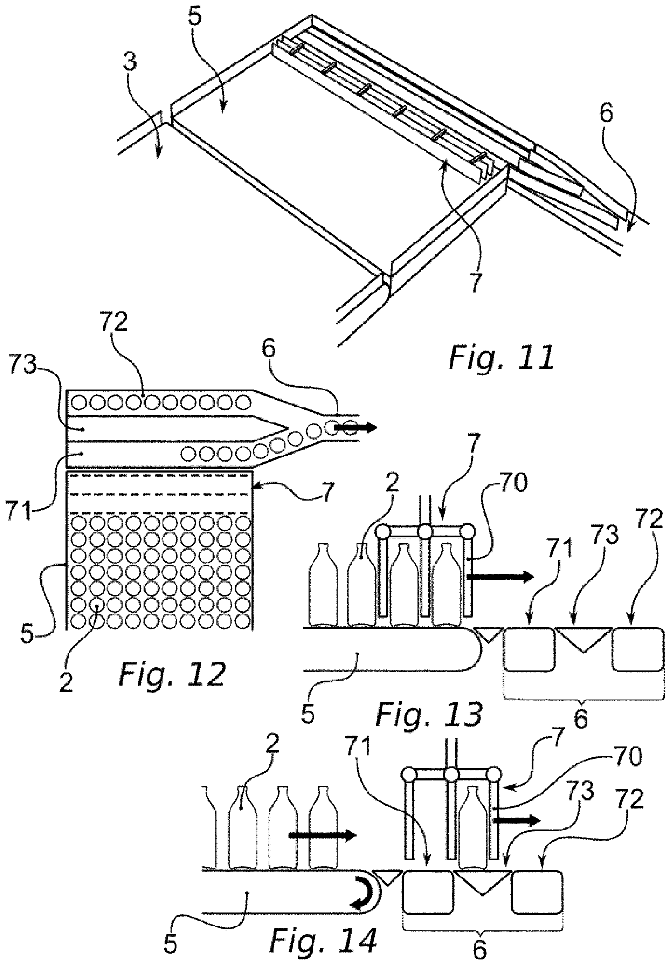

According to another embodiment, such as shown in figures 11 to 13, the at least one downstream conveyor 6 is dedicated to transport at least a single-lane flow and comprises an output area, located along the output width of the distribution surface 5. Such output area is configured to receive two rows of products 2, to be delivered into the single-flow to the downstream conveyor 6.

According to the invention, more than two rows of products 2 could be delivered, simultaneously or not, into several corresponding downstream conveyor 6.

Therefore, the output area comprises a first upload zone 71 and a second upload zone 72, separated by a buffer area 73. The first upload zone 72 and the second upload zone 72 are conveyors, while the buffer area 73 is a stationary plate.

So when transferring for example two rows simultaneously, one of the two rows is moved on the buffer area 73 while the other row is moved on the closest first upload zone 71. The first conveyor is turned on to deliver the other row to the downstream conveyor 6. When the first upload zone 71 is empty, the pusher moves the one of the rows to the second upload zone 72, which is turned on to move the products 2 to deliver the other row to the downstream conveyor 6 following the other row. During this lap of time, the pusher comes back to handle and push two rows, and so on.

So this discontinuous transfer allows to continuously supply the downstream conveyor 6.

According to a preferred embodiment, the production line 1 is configured to receive a multi-lane flow comprising a nested configuration of the products 2 with several switched rows. Such nested configuration is obtained due to the configuration of the stacked level of the pallet 4. So in order to convert the nested configuration into an unnested configuration, one of the workstations 10 comprises an alignment module 8 of the rows.

The alignment consists for example in switching half of the rows, one on two, regarding the others, in order to align both of the rows and switched rows into a square matrix configuration, which is so unnested.

According to an embodiment, the alignment module 8 is located along the upstream conveyor 3, such as shown in figure 4, or along the distribution surface 5, such as shown in figures 2 and 3.

Such alignment module 8 can be of any type. According to an embodiment, the alignment module 8 can comprise temporarily blockers of the movement of the products 2 along the upstream conveyor 3 or the distribution surface 5, in order to allow the switched lane to align with the others.

The alignment module 8 can also comprise corridors, each of the corridors being managed between two spaced longitudinal guides, in order to maintain the straight and linear longitudinal alignment of the lanes relative to each other.

So with a pallet 4 with a nested configuration with rows (or columns) comprising a number of products 3 (i.e. the switched rows (or columns) comprising one product 3 less), it is possible to load the upstream conveyor 3 with transversal rows of the exact same number of products 3. (for example: 20 or 30 products depending of the size and format of the products 3).

According to another embodiment, not shown, the depalletizing device or the decrating device feeding the upstream conveyor 3 comprises a handling head of the products 2 integrating the alignment module 8 of the switched rows of the products 2. For example, the alignment module 8 can be integrated into a relative movement of the tools for grabbing or clamping the bottle neck.

According to an embodiment, the production line 1 can be dedicated to the recycling of containers, especially glass bottle recycling, or even plastic bottle recycling when bottles are made of so-called "refillable-PET" or "returnable-PET". So, the at least workstation 10 or "specific workstation 100" is a washing tunnel, especially operating with a multi-lane flow of products 2.

The invention also relates to a conveying device for conveying products 2 along a production line 1, each of the products 2 being a container.

The conveying device comprises at least an upstream conveyor 3 moving along the stream direction, and at least one downstream conveyor 6 with an entry orientated transversally relative to the stream direction.

According to the invention, the conveying device further comprises a distribution surface 5 with an input located at an end of the upstream conveyor 3 and being orientated longitudinally along the stream direction and also being aligned with the upstream conveyor 3.

Moreover the entry of the at least one downstream conveyor 3 is adjacent to the output of the distribution surface 5.

Such conveying device can comprise any of the corresponding characteristics specified above.

So, the production line 1 can comprise such conveying device.

The invention also relates to the use of a conveying device for converting a multi-lane flow of products 2 into at least a single-lane flow of the products 2, with an output longitudinally transferring from the multi-lane flow to the single-lane flow on at least one transversal downstream conveyor 6, wherein a distribution surface 5 is longitudinally fed with the multi-lane flow along the stream direction and has an input aligned at the end of an upstream conveyor 3 moving the multi-lane flow.

The invention also relates to a production method for treatments of products 2 along the production line 1, each of the products 2 being a container.

The production method comprises at least the following steps.

First, the upstream conveyor 3 is loaded into a multi-lane flow with the products 2, for example from a pallet 4 of stacked levels of the products 2 or from a crate.
Then the upstream conveyor 3 moves the multi-lane flow of the products 2 along a stream direction, through successive workstations 10 dedicated to the treatments of the products 2, the workstations 10 being located along the production line 1.

Then at the end of the upstream conveyor 3, an input of a distribution surface 5 is fed with products 2.

Then the products 2 are transferred from an output of the distribution surface 5 longitudinally to the at least one transversal downstream conveyor 6.

Then, the single-lane flow of products 2 is moved along the at least one downstream conveyor 6, especially a filler 101.

According to the invention, the feeding of the products 2 from the upstream conveyor 3 to the distribution surface 5 is continuously realized longitudinally along the stream direction in alignment of the upstream conveyor 3 and the distribution surface 5.

According to an embodiment, the multi-lane flow of the products 2 has a nested configuration with switched rows. Thenceforth the method comprises the step of aligning the switched rows of the nested multi-lane flow into an unnested multi-lane flow, especially through the alignment module 8.

In particular, the aligning step consists in switching half of the rows, one on two, regarding the others, in order to align both of the rows and switched rows into a square matrix configuration, which is so unnested.

According to an embodiment, the production method comprises a step of spacing each row of products 2 in order to allow the transfer means 7 to transfer each row separately to the at least one downstream conveyor 6.

According to an embodiment, the production method is dedicated to the production line 1, such as previously described.

The invention also relates to the use of the distribution surface 5 for converting a multi-lane flow of products 2 into at least a single-lane flow of the products 2, with an output longitudinally transferring from the multi-lane flow to at least the single-lane flow on at least one transversal downstream conveyor 6, wherein the distribution surface 5 is longitudinally fed with the multi-lane flow along the stream direction and has an input aligned at the end of an upstream conveyor 3 moving the multi-lane flow.

## Claims

1. A production line (1) for treatments of products (2), each of the products (2) being a container, comprising
- at least an upstream conveyor (3), loaded with products (2) into a multi-lane flow,
the upstream conveyor (3) moving the products (2) along a stream direction,
- successive workstations (10) along the production line (1), the workstations (10) being dedicated to the treatments of the products (2), at least one specific workstation (100) of the workstations (10) comprising a multi-lane treatment module along the upstream conveyor (3),
- a distribution surface (5) located at an end of the upstream conveyor (3), the upstream conveyor (3) feeding with products (2) an input of the distribution surface (5),
- at least one downstream conveyor (6) located at an output of the distribution surface (5), transversally moving the products (2) along at least a single-lane flow,
- at least a transfer means (7) longitudinally transferring relative to the stream direction at least a row of the products (2) from the distribution surface (5) to the at least one transversal downstream conveyor (6),
**characterized in that**
- the distribution surface (5) is orientated longitudinally along the stream direction and is aligned with the upstream conveyor (3) and said upstream conveyor (3) feeding an input of the distribution surface (5) with a multi-lane flow of products (2).

2. Production line (1) according to claim 1, **characterized in that**
- the multi-lane flow comprises a nested configuration of the products (2) with several switched rows,
- one of the workstations (10) comprising an alignment module (8) of the rows.

3. Production line (1) according to claim 2, **characterized in that**
- the alignment module (8) is located along the upstream conveyor (3) or along the distribution surface (5).

4. Production line (1) according to claim 2, **characterized in that** it further comprises
- a depalletizing device loading the upstream conveyor (3), the depalletizing device comprising a handling head of the products (2) integrating the alignment module (8) of the switched rows of the products (2).

5. Production line (1) according to claim 2, **characterized in that** it further comprises
- a decrating device loading the upstream conveyor (3), the decrating device comprising a handling head of the products (2) integrating the alignment module (8) of the switched rows of the products (2).

6. Production line (1) according to claim 1, **characterized in that** it comprises
- two downstream conveyors (6) located adjacent each other,
- the transfer means (7) transferring simultaneously two rows of products (2) from the distribution surface (5) to each of the two downstream conveyors (6).

7. Production line (1) according to claim 6, **characterized in that**
- the two downstream conveyors (6) are moving the single-lane of products (2) in the same direction.

8. Production line according to claim 6, **characterized in that**
- the two downstream conveyors (6) are moving the single-lane of products (2) in opposite directions.

9. Production line (1) according to claim 1, **characterized in that**
- at least one downstream conveyor (6) dimensioned to transport a multi-lane flow, so two or more single-lane flows.

10. Production line (1) according to claim 1, **characterized in that** it comprises at least two downstream conveyors, the at least two downstream conveyors (6) being separated by a dead plate.

11. Production line (1) according to claim 1, wherein the production line is a recycling line, the multi-lane treatment module of the at least one specific workstation (100) being a washing tunnel.

12. Conveying device for conveying products (2) along a production line, each of the products (2) being a container, comprising
- at least an upstream conveyor (3) moving along a stream direction,
- at least one downstream conveyor (6) with an entry orientated transversally relative to the stream direction,
**characterized in that** the conveying device further comprises
- a distribution surface (5) with an input located at an end of the upstream conveyor (3) and being orientated longitudinally along the stream direction and being aligned with the upstream conveyor (3),
- the entry of the at least one downstream conveyor (6) is adjacent to an output of the distribution surface (5).

13. Production method for treatments of products (2) along a production line, each of the products (2) being a container, wherein
- an upstream conveyor (3) is loaded into a multi-lane flow with the products (2),
- the upstream conveyor (3) moves the multi-lane flow of the products (2) along a stream direction, through successive workstations (10) dedicated to the treatments of the products (2), the workstations (10) being located along the production line (1),
- at the end of the upstream conveyor (3), feeding with products (2) an input of a distribution surface (5),
- transferring the products (2) from an output of the distribution surface (5) longitudinally to at least one transversal downstream conveyor (6),
- moving the single-lane flow of products (2) along the at least one downstream conveyor (6) to a downstream single lane workstation (101),
**characterized in that**
- the feeding of the products (2) from the upstream conveyor (3) to the distribution surface (5) is continuously realized longitudinally along the stream direction in alignment of the upstream conveyor (3) and the distribution surface (5).

14. Production method according to the preceding claim, wherein
- the multi-lane flow of the products (2) has a nested configuration with switched rows,
**characterized in that** the method further comprising
- aligning the switched rows of the nested multi-lane flow into an unnested multi-lane flow.

15. Use of a distribution surface (5) for converting a multi-lane flow of products (2) into at least a single-lane flow of the products (2), with an output longitudinally transferring from the multi-lane flow to the at least single-lane flow on at least one transversal downstream conveyor (6), wherein the distribution surface (5) is longitudinally fed with the multi-lane flow along the stream direction and has an input aligned at the end of an upstream conveyor (3) moving the multi-lane flow.
